Europäisches Patentamt

**European Patent Office**

Office européen des brevets

(19)

(11) Publication number: **0 024 959**
**B1**

(12)

# EUROPEAN PATENT SPECIFICATION

(45) Date of publication of patent specification: **04.04.84**

(51) Int. Cl.³: **G 02 B  7/26**

(21) Application number: **80400918.1**

(22) Date of filing: **20.06.80**

(54) Connector for optical waveguides.

(30) Priority: **22.08.79 US  68790**

(43) Date of publication of application:
**11.03.81 Bulletin 81/10**

(45) Publication of the grant of the patent:
**04.04.84 Bulletin 84/14**

(84) Designated Contracting States:
**DE FR GB IT**

(56) References cited:
**GB - A - 1 458 897**
**US - A - 4 127 319**

**ELECTRONICS INTERNATIONAL, Vol. 51, No.
12, 8 June 1978 B. LeBOSS "Fiber-Optic
Connectors Match Singles" page 161**

(73) Proprietor: **THE BENDIX CORPORATION
Executive Offices Bendix Center
Southfield Michigan 48037 (US)**

(72) Inventor: **Karol, James Joseph
28, Main Street
Unadilla, New York 13849 (US)**
Inventor: **Morse, Ronald Wayne
10, Division Street
Sidney, New York 13838 (US)**

(74) Representative: **Brullé, Jean et al,
Service Brevets Bendix 44, rue François 1er
F-75008 Paris (FR)**

Courier Press, Leamington Spa, England.

Connector for optical waveguides

This invention relates to a connector for optical waveguides of the type comprising one or more optical fibers; more particularly, it relates to a separable connector with pin and socket terminals.

In optical systems using fiber optics for transmitting signals by light energy, it is often necessary to couple two cables end-to-end for the signal transmission path. Typically an optical fiber cable comprises a fiber or bundle of fibers covered by a jacket of plastic material for protecting the fibers from damage due to handling during installation and exposure in the operating environment. In order to facilitate repeated connection and disconnection of optical fiber cables, it is desirable to utilize separable connectors having single or multiple pairs of terminals such as the connectors commonly used in the electronic industry.

A connector for optical fiber cables must provide for accurate alignment of the fibers being joined and provide support for the cable jacket. The connector must be provided with terminals for the fibers which are capable of repeated connection and disconnection and which are of simple and low cost construction.

Connectors of the pin and socket type for optical fiber cables have been disclosed in the prior art. In U.S. Patent 4,140,366 granted to Makuch et al. a connector is disclosed in which each cable is provided with a special termination in the form of a pin in which the end of the fiber bundle is flush with the forward end of the pin. In this arrangement, the pin of one cable is mounted in one of the connector members with an annular passage in the insert surrounding the pin. The pin for the corresponding cable is mounted on the other connector member within an alignment sleeve. When the connector members are brought together in mating engagement, the alignment sleeve enters the annular passage in the first connector member so that the first pin telescopically enters the alignment sleeve and is brought into opposed end-to-end relationship with the second pin.

A further example of a connector for optical fiber cables is given in GB—1,458,897 which discloses a connector comprising a metal ferrule having a cylindrical tunnel extending a major portion of its length and containing an optical fiber. The end faces of the ferrule and of the fiber are ground flat after assembly.

A general object of this invention is to provide an optical fiber cable connector of the pin and socket type which overcomes certain disadvantages of the prior art.

To this end the invention proposes a connector for optical waveguides enclosed by a protective jacket, comprising first and second separable connector members adapted to connected in mating relationship, a pin terminal supported by the first connector member, said pin terminal including a pin shaft having forward and rearward end portions and adapted to receive a first optical waveguide extending through the pin shaft from the rearward end to the forward end thereof, a socket terminal supported by the second connector member, said socket terminal including a socket shaft and a sleeve, said sleeve circumposing said shaft and having a forward end portion adapted to mate with the forward end portion of said pin shaft and said socket shaft being adapted to receive a second optical waveguide thereof, means for supporting said socket shaft for axial movement in said sleeve, means for biasing said socket shaft in the forward direction whereby when said sleeve mates with said pin shaft the forward end of the pin shaft abuttingly engages the forward end of the socket shaft and pushes it rearwardly and the ends of the optical waveguides are aligned with each other, characterized in that each of said shaft rearward end portions is knurled and adapted to receive hereover the protective jacket when the waveguides extend through their respective shafts, and in that it comprises a second sleeve crimp fitted about the rearward end portions of each respective shaft whereby the knurled portion grips into the protective jacket and the optical waveguides are secured to their respective terminals.

A more complete understanding of this invention may be obtained by the detailed description that follows taken with the accompanying drawings wherein:

Figure 1 is an exploded perspective view of a separable connector incorporating the subject invention;

Figure 2 is a fragmentary view of a connector member showing a pin terminal therein;

Figure 3 is a fragmentary view of a connector member with a socket terminal therein, and

Figure 4 shows a pin terminal and a socket terminal in mated relation.

Referring now to the drawings, there is shown an illustrative embodiment of the invention in an optical fiber waveguide connector of the separable type having multiple pairs of terminals. It will be appreciated, as the description proceeds, that the invention is useful in many different applications.

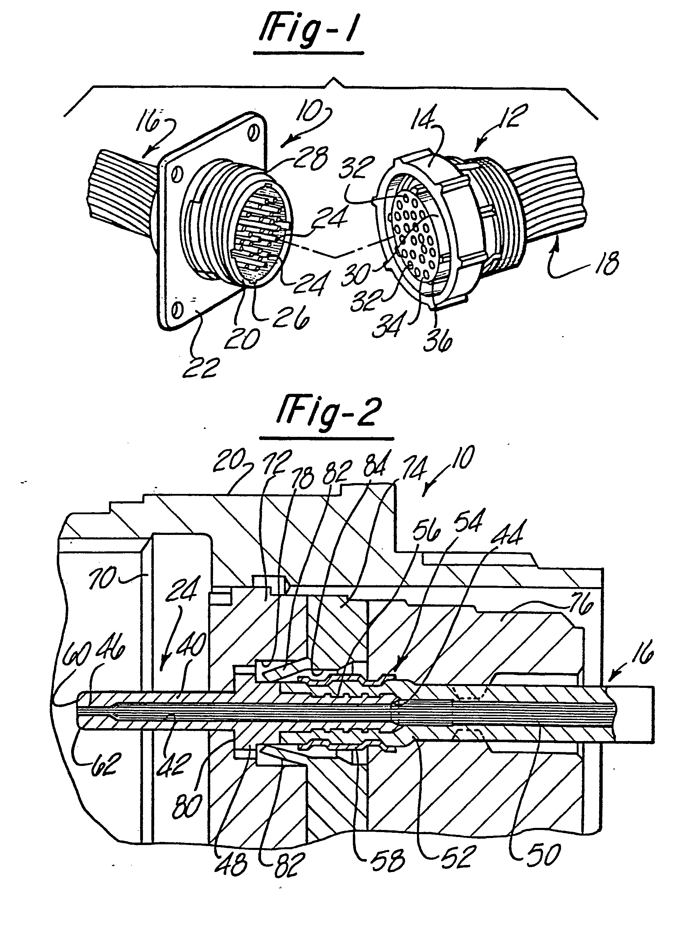

Figure 1 shows an exploded perspective view of an optical waveguide or cable connector which embodies pin and socket terminals according to this invention. The cable connector comprises a first connector member 10 and a second connector member 12 which are adapted to be drawn together in mating engagement by a coupling nut 14. The connector member 10 receives multiple optical fiber cables 16 at its rearward end and is adapted to couple each cable to a corresponding one of multiple cables 18 which are received by the coupling member 12 at its rearward end.

The connector member 10 comprises a cylindrical shell 20 which is provided with a mounting flange 22. The shell 20 supports multiple terminal pins in an insert (not shown in Figure 1) mounted within the shell. Each of the terminal pins 24 is connected, in a manner which will be described subsequently, to a selected one of the optical fiber cables 16. The shell 20 is provided with plural keyways 26 to establish orientation with the connector member 12. Also, the shell 20 is provided with an external screw thread 28 which is engaged by the coupling nut 14 for drawing the members 10 and 12 into mating relationship.

The connector member 12 comprises a cylindrical shell 30 which supports multiple socket terminals 32 in an insert 34. Each of the socket terminals 32 is connected with a selected one of the optical fiber cables 18 and is adapted to mate or telescopically engage a corresponding one of the pin terminals 24. The shell 30 is provided with plural keys 36 which are aligned with corresponding keyways 26 to provide proper orientation of the connector members. The coupling nut 14 is rotatably mounted on a shell 30 and is axially retained thereon in a conventional manner.

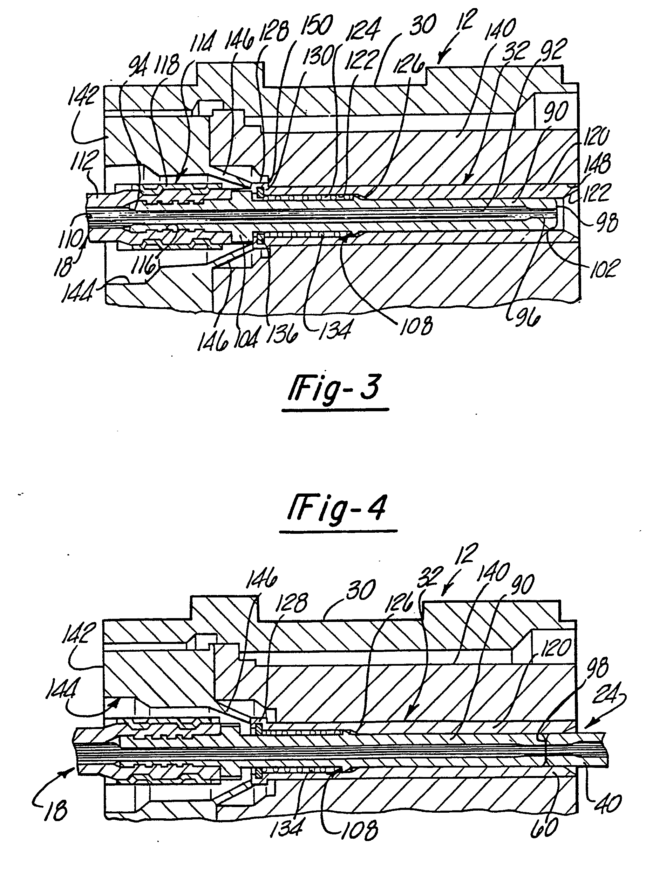

The pin and socket terminals of this invention are shown in detail in Figures 2, 3 and 4. Figure 2 shows a pin terminal 24 mounted in the connector member 10. The pin terminal 24 comprises a pin shaft 40 having an axial bore 42 therein extending from one end of the shaft to the other. The bore has a tapered opening 44 at the rearward end of the shaft and has a cylindrical opening 46 of reduced diameter at the forward end of the shaft. The pin contact 24 is provided with an annular shoulder 48 for mounting purposes and the portion of the shaft forward of the mounting shoulder is of uniform diameter. The forward end of the shaft 40 is provided with a flat annular surface 60 surrounding the opening 46. It is also provided with a rounded should 62 to facilitate entrance of the pin contact into the corresponding socket contact. The portion of the shaft rearward of the shoulder 48 is adapted to receive an optical fiber cable 16. The cable 16 comprises a bundle of optical fibers 50 and a jacket 52. The shaft 40 of the pin contact 24 is provided with a crimp type fitting 54 for securing the cable 16 to the pin contact. The fitting 54 includes the rearward portion of the shaft 40 which has a knurled surface 56 thereon and which is adapted to receive the cable jacket 52 in telescopic relation. The cable jacket 52 is stripped from the forward end of the bundle of optical fibers and the fibers extend through the bore 42 of the shaft 40. A crimped sleeve 58 is disposed over the jacket 52 and is crimped against the shaft 40 to retain the cable 16 on the pin contact 24.

When the bundle of optical fibers 50 is inserted through the bore 42 in the shaft 40, the fibers initially extend beyond the flat surface 60 on the forward end of the pin terminal. The fibers at the forward end are filled with a suitable adhesive, such as an epoxy resin. After the adhesive has cured, the termination of the fibers is completed by grinding the ends of the fibers until they are flush with the end of the pin terminal and by polishing them to provide a smooth optical surface.

The pin terminal 24, mounted on the end of a cable 16 as described above, is supported in the connector member 10, as shown in Figure 2. The cylindrical shell 20 of the connector member contains an assembly of an interfacial seal 70 of resilient material at the forward end thereof, an insert 72 of rigid plastic, retention member 74 of metal or resilient plastic, and a grommet 76 of a soft resilient material. This assembly is provided with multiple axially extending passages each of which receives a pin terminal 24 and which extends through the grommet, the retention member, the insert and the seal. The insert 72 has an enlarged passage 78 and the rearward side thereof provides a seating shoulder 80 for the mounting shoulder 48 on the pin terminal 24. The retention member 74 is provided with an enlarged passage 84 and plural retention fingers 82 which embrace the pin terminal behind the mounting shoulder 48. The pin terminal 24 is inserted from the rearward end of the connector member 10 through a passage 77 in the grommet 76 and through the passage 84 in the retention member 74 until the mounting shoulder 48 is seated against the seating shoulder 80 in the insert 72. The insertion causes the retention fingers 82 to be deflected by the shoulder 48 and the fingers hold the terminal in place.

A socket terminal 32, as installed in the connector 12, is shown in Figure 3. The socket terminal comprises a socket shaft 90 having an axial bore 92 therein extending from one end of the shaft to the other. The bore has a tapered opening 94 at the rearward end of the shaft and has a cylindrical opening 96 of reduced diameter at the forward end of the shaft. The forward end of the shaft 90 is provided with a flat annular surface 98 surrounding the opening 96 and a rounded shoulder 102. The socket shaft 90 is provided with an annular shoulder 104 for a purpose to be described subsequently. The portion of the socket shaft 90 forward of the shoulder 104 is of uniform diameter except for a shoulder 108 which has an angular front surface and a radial rear surface which will be described further subsequently. The portion of the shaft 90 rearward of the shoulder 104 is adapted to receive an optical fiber cable 18. Cable 18 comprises a bundle of optical fibers 110 and a jacket 112. The shaft 90 is provided with a crimp type fitting 114 of the same construction as described with reference to the pin terminal and includes a knurled surface 116 thereon and a crimped sleeve 118. The bundle of fibers 110 are inserted into the socket shaft 90, filled with an adhesive, and ground and polished in the same manner as described with reference to the pin terminal 24.

The socket terminal 32 also includes a socket sleeve 120 which is disposed in telescopic relation with the forward end of the socket shaft 90. The sleeve 120 is provided with a tapered opening 122 at the forward end to facilitate entrance of the mating pin terminal. The forward end of the sleeve 120 has a clearance fit with the shaft 90; the rearward end has an inside wall surface 120 of larger diameter and which provides an annular space 124 between it and the shaft 90. The wall of the sleeve is provided with a shoulder 126 which has an angular surface corresponding to that on shoulder 108. The rearward end of the sleeve is provided with an annular external mounting shoulder 128 which is undercut to provide internal annular groove 130. A coil spring 134 is disposed in the annular space 124 between the sleeve and the shaft and biases the shaft in the forward direction. The rearward end of the spring is seated against a snap ring 136 which is disposed in the annular groove 130 on the sleeve. In the assembly of the sleeve 120 onto the shaft 90, the snap ring 136 and spring 134 are placed over the shaft in that sequence by flexing them sufficiently to fit over the shoulder 108. The fibers are inserted into the shaft, epoxied, and polished. Then the sleeve 120 is placed over the shaft and the snap ring 136 is snapped into the annular groove 130.

The socket terminal 32 is supported in the connector member 12 in a manner similar to that described for the pin terminal 24. The cylindrical shell 30 of the connector member contains an insert 134 and a retention member 142. The retention member is provided with an opening 144 and plural retention fingers 146 which are aligned with the opening. The socket terminal 32 is inserted through the opening in the retention member 142 so that the mounting shoulder 128 is seated against a stop shoulder 150 in the insert. In this position the retention fingers 146 are disposed behind the mounting shoulder 128 to hold the socket terminal 32 in place.

As described above, the connector member 10 includes multiple pin terminals 24 which are mounted therein as shown in Figure 2. Similarly, the connector member 12 includes multiple socket terminals 32, mounted as shown in Figure 3, each of which corresponds with one of the pin terminals 24. Accordingly, when the connector members 10 and 12 are placed in mating engagement, each pin terminal 24 enters a corresponding socket terminal 32. This relationship is illustrated in Figure 4. With the connector members 10 and 12 in fully mated condition, i.e. with the coupling nut 14 tightened, each pin terminal 24 is inserted into its corresponding socket terminal 32 with the end surface 60 of the pin shaft 40 in abutment with the end surface 98 of the socket shaft 90. In this condition the socket shaft 90 is pushed rearwardly or retracted within the socket sleeve 120 by the pin shaft 40. As shown in Figure 4, in the fully mated condition the spring 134 is compressed and the shoulder 104 is unseated from the mounting shoulder 128 on the sleeve 120. Thus, the spring mounting of the socket shaft 90 allows for mating tolerances of corresponding terminals and insures that the pair of terminals will be coupled by an end-to-end abutting engagement. The shaft 40 of the pin terminal 24 has a clearance fit with the socket sleeve 120 and thus provides axial alignment of the pin terminal and the socket terminal. The separable connector members 10 and 12 may be repeatedly connected and disconnected and the corresponding pin and socket terminals will be reconnected each time with accurate positioning relative to each other.

## Claims

1. A connector for optical waveguides enclosed by a protective jacket, comprising first and second separable connector members (10, 12) adapted to be connected in mating relationship, a pin terminal supported by the first connector member (10), said pin terminal including a pin shaft (24) having forward and rearward end portions and adapted to receive a first optical waveguide (50) extending through the pin shaft from the rearward end to the forward end (60) thereof, a socket terminal (32) supported by the second connector member (12), said socket terminal including a socket shaft (90) and a sleeve (120), said sleeve circumposing said shaft and having a forward end portion adapted to mate with the forward end portion of said pin shaft and said socket shaft being adapted to receive a second optical waveguide (110) extending through the socket shaft from the rearward end to the forward end thereof, means for supporting said socket shaft for axial movement in said sleeve, means (134) for biasing said socket shaft (90) in the forward direction whereby when said sleeve mates with said pin shaft the forward end (60) of the pin shaft abuttingly engages the forward end of the socket shaft and pushes it rearwardly and the ends of the optical waveguides are aligned with each other, characterized in that each of said shaft rearward end portions is knurled and adapted to receive thereover the protective jacket (52) when the waveguides extend through their respective shafts, and in that it comprises a second sleeve crimp (58, 118) fitted about the rearward end portions of each respective shaft whereby the knurled portion grips into the protective jacket and the optical waveguides are secured to their respective terminals.

2. A connector according to Claim 1 characterized in that said means (134) for biasing comprises a spring.

3. A connector according to Claim 2 characterized in that said spring (134) is telescopically disposed between said socket shaft and said socket sleeve.

**Patentansprüche**

1. Verbindung für optische Wellenleiter, die von einer Schutzhülle umschlossen sind, mit einem ersten und einem zweiten Verbindungsglied (10, 12), die trennbar und ineinanderpassend verbindbar sind, einem Steckeranschluß, der von dem ersten Verbindungsglied (10) getragen wird, wobei der Steckeranschluß eine Steckerwelle (24) mit einem vorderen und einem rückwärtigen Endabschnitt aufweist, der zur Aufnahme eines ersten optischen Wellenleiters (50) dient, der sich durch die Steckerwelle hindurch von deren rückwärtigen Ende zu deren vorderen Ende (60) erstreckt, einem Muffenanschluß (32), der von dem zweiten Verbindungsglied (12) getragen wird, wobei der Muffenanschluß eine Muffenwelle (90) und eine Hülse (120) aufweist, die die Welle umgibt und einen vorderen Endabschnitt besitzt, der mit dem vorderen Endabschnitt der Steckerwelle zusammenpaßt, wobei die Muffenwelle einen zweiten optischen Wellenleiter (110) aufnehmen kann, der sich durch die Muffenwelle hindurch von deren rückwärtigen Ende zu deren vorderen Ende erstreckt, Abstützmitteln, die die Muffenwelle so abstützen, daß sie in der Hülse axial beweglich ist, Vorspannmitteln (134), die die Muffenwelle (90) in Vorwärtsrichtung vorspannen, wodurch, wenn die Hülse mit der Steckerwelle verbunden ist, das vordere Ende (60) der Steckerwelle am vorderen Ende der Muffenwelle anliegt und es in Rückwärtsrichtung stößt und die Enden der optischen Wellenleiter zueinander ausgerichtet sind, dadurch gekennzeichnet, daß jeder der rückwärtigen Wellen-Endabschnitte gerändelt ist und die Schutzhülle (52) aufnehmen kann, wenn sich die Wellenleiter durch ihre entsprechenden Wellen erstrecken, und daß sie eine zweite Hülse (58, 118) aufweist, die durch Bördeln auf die rückwärtigen Endabschnitte jeder entsprechenden Welle aufgepaßt ist, wodurch der gerändelte Abschnitt in die Schutzhülle greift und die optischen Wellenleiter an ihren entsprechenden Anschlüssen befestigt werden.

2. Verbindung nach Anspruch 1, dadurch gekennzeichnet, daß die Vorspannmittel (134) eine Feder aufweisen.

3. Verbindung nach Anspruch 2, dadurch gekennzeichnet, daß die Feder (134) zwischen der Muffenwelle und der Muffenhülse teleskopierbar angeordnet ist.

**Revendications**

1. Un connecteur pour guides d'ondes optiques entourés par une gaîne protectrice, comprenant des premier et second éléments de connecteur séparables (10, 12) conçus pour pouvoir être assemblés dans une disposition relative accouplée, une borne à fiche portée par le premier élément de connecteur (10), ladite borne à fiche comprenant une tige (24) de fiche ayant des parties d'extrémité avant et arrière et étant conçue pour recevoir un premier guide (50) d'ondes optiques qui s'étend dans la tige de fiche depuis l'extrémité arrière jusqu'à l'extrémité avant (60) de cette dernière, une borne (32) à douille portée par le second élément de connecteur (12), ladite borne à douille comprenant une tige (90) de douille et un manchon (120), ledit manchon entourant ladite tige et ayant une partie d'extrémité avant conçue pour s'accoupler avec la partie d'extrémité avant de ladite tige de fiche et ladite tige de douille étant conçue pour recevoir un second guide (110) d'ondes optiques qui s'étend dans la tige de douille depuis l'extrémité arrière jusqu'à l'extrémité avant de cette dernière, des moyens pour porter ladite tige de douille de façon qu'elle puisse effectuer un mouvement axial dans ledit manchon, des moyens (134) pour solliciter ladite tige (90) de douille dans la direction avant de sorte que, lorsque ledit manchon s'adapte sur ladite tige de fiche, l'extrémité avant (60) de la tige de fiche vient en appui de butée contre l'extrémité avant de la tige de douille et la pousse vers l'arrière et que les extrémités des guides d'ondes optiques sont alignées l'une avec l'autre, caractérisé en ce que chacune desdites parties d'extrémités arrière de tige est moletée et conçue pour recevoir sur elle la gaîne protectrice (52) lorsque les guides d'ondes s'étendent dans leurs tiges respectives et en ce qu'il comprend un second manchon (58, 118) adapté par sertissage autour des parties d'extrémité arrière de chaque tige respective de sorte que la partie moletée s'accroche et mord dans la gaîne protectrice et que les guides d'ondes optiques sont fixés à leurs bornes respectives.

2. Un connecteur selon la revendication 1, caractérisé en ce que lesdits moyens de sollicitation (134) comprennent un ressort.

3. Un connecteur selon la revendication 2, caractérisé en ce que ledit ressort (134) est monté télescopiquement entre ladite tige de douille et ledit manchon de douille.

## Fig-1

## Fig-2

_Fig-3_

_Fig-4_